Europäisches Patentamt

European Patent Office

Office européen des brevets

(11) Publication number: **0 164 253**
A1

## (12) EUROPEAN PATENT APPLICATION

(21) Application number: 85303840.4

(22) Date of filing: 31.05.85

(51) Int. Cl.⁴: **G 11 B 15/68, G 11 B 31/00**

(30) Priority: 01.06.84 GB 8414088

(43) Date of publication of application: **11.12.85**
**Bulletin 85/50**

(84) Designated Contracting States: **BE DE FR IT NL SE**

(71) Applicant: **Viewfax-Digital Limited, King Edward Building 205-219 Corporation Street, Birmingham, B4 6SE (GB)**

(72) Inventor: **Reid, Lindsay Heath, 98 Widney Lane, Solihull West Midlands, B91 3LL (GB)**
Inventor: **Henry, John, 10 North Drive, Edgbaston Birmingham, B5 7RP (GB)**

(74) Representative: **Lomas, Geoffrey Michael et al, BARKER, BRETTELL & DUNCAN 138 Hagley Road Edgbaston, Birmingham B16 9PW (GB)**

(54) Sound reproducing apparatus.

(57) In order to provide a continuous supply of background music from cassette tapes, without perceptible cassette change noises, a cassette player has two playing stations at each of which there is a respective tape reading head (13, 14) and a respective tape drive motor (11, 12), and the playing stations are operated alternately. The tapes have recorded on them, in addition to the music recordings, an inaudible lead-out cue signal before the end of the music recording, and an inaudible lead-in cue signal before the beginning of the music recording. The lead-out signal is used to initiate a change over sequence in which the sound from the tape being played is faded out by a digitally controlled fade out/in unit (17), the tape drive motor at the other station is started, a sound selector switch (16) is operated to switch the sound output whilst the fade out/in unit (17) is producing maximum attenuation, in order to avoid switching noise, and when the second tape is reaching its normal playing speed the fade out/in unit is operated to fade in the sound from the second tape. When a new cassette is loaded the lead-in cue signal is used to bring the tape to a ready condition.

# SOUND REPRODUCING APPARATUS

This invention relates to sound reproducing apparatus for playing sound recordings, and particularly, but not exclusively, to apparatus for providing background music in licensed premises, shops and other places where the management wishes to play music on a continuous or semi-continuous basis.

It is found in practice that the quality and selection of music provided in licensed premises etc. has a substantial bearing on the profits of the establishment.

Various kinds of tape players are available for playing background music in licensed premises. There is the type which uses a closed loop of tape which has the advantage that an uninterrupted flow of music is produced, but the serious disadvantage that the music repeats itself after a certain length of time. There is the more usual type which requires a cassette to be replaced or re-loaded when the cassette tape is fully run. This has the considerable disadvantages that manual intervention is required and that a break in the music occurs when the cassette is being changed. Since the main duty of the person responsible for attending to the cassettes is probably serving drinks to customers, a considerable period of time may pass before that person has the opportunity to attend to changing of the cassette. In the meantime there is no music. Even if that person happens to be immediately available to change the cassette there will still be a protracted pause in the music whilst the cassette is being changed. This detracts from the atmosphere of the establishment and reminds the customers that the music is recorded.

We have realised that there is a need for a sound reproducing apparatus that will enable a plurality of sound recordings, such as cassette recordings or laser discs, to be played in succession and incorporating a change-over facility which does not require immediate attention to effect the change-over.

We are aware of proposals for relatively complex and costly apparatus which comprise a large store of tape cassettes with automatic mechanism for bringing selected cassettes to one or more playing stations. Such equipment has been designed for use by television stations to transmit a sequence of programmes automatically. Specification No. G.B. 2 051 454 A is a typical example, in which a succession of tapes is played under the control of a time programme, the cassettes being stored in a matrix store.

Specification No. G.B. 1 587 056 discloses a further example of such a television cassette system in which the cassettes are stored on an endless track.

Specification No. G.B. 1 302 469 discloses a device with two playback sites for playing television programmes. One site plays whilst the other is automatically reloaded from a drum store of cassettes. Specification No. G.B. 1 467 270 discloses a further example in which two playback devices play alternately, and when one playback device has stopped the other is started up.

It will be appreciated that a television station can justify the cost of such expensive pieces of equipment, but that the cost would usually be prohibitive to the owner of premises where background music is played.

Our invention is based on our realisation that there would be a demand for a semi-automatic device which will provide an effectively continuous flow of background music provided that it receives intermittent attention.

The term 'record unit' will be used hereinafter to denote a device, such as a cassette tape or laser disc, which carries a sequence of sound recordings.

According to one aspect of the invention a sound reproducing apparatus comprises a plurality of record unit playing stations, each station comprising a respective drive means for driving a record unit located at that station, and a respective reading head for reading the recording of the respective record unit, a common sound output stage, selector switch means for selectively connecting a sound output signal of the reading heads to the sound output stage, the record units each being provided with a lead-out cue at a predetermined distance in advance of the end of the sound recording, the reading heads being adapted to provide a cue output signal in response to reading a cue, and change-over control means responsive to the cue output signals of the reading heads and controlling the drive means and the selector switch means, the change-over control means being arranged such that when the lead-out cue signal is received from a first of the stations at which a record unit is being driven, the drive means at a second of the stations is started and the selector switch means is subsequently operated to disconnect the sound output stage from the reading head of the first station and to connect the sound output stage to the reading head of the second station, a similar sequence being performed when the lead-out cue signal is produced at the second station.

Thus, the provision of a lead-out cue associated with the recording of the record unit provides a cue signal that the end of the recording on that unit is being reached, and a record unit at another station is started up to enable a substantially uninterrupted transition to be made from the sound recording of one unit to that of another, without immediate need for human assistance, the switching of the sound outputs of the stations being performed automatically.

Since each record unit may last for, say, one or two hours, there is then plenty of time, even on a two station machine, for the person in charge of the machine to change the record unit that was last played.

The lead-out cue provides an early warning that the end of the sound recording at the first station is being reached, and thereby provides sufficient time for the record unit at the further station to be brought up to speed before the recording of that unit is transmitted.

Preferably the apparatus is provided with indicator means, such as a flashing red light, to indicate that a record unit needs changing.

The selector switch means may be arranged to provide a precise cut-off from the recording being read at the first station to that being read at the second station on change-over. Preferably, however, the selector switch means is arranged to fade out the sound output from the first station and to fade in the sound output from the second station in order to provide a smooth transition between the sound recordings of the two units.

The fade out and fade in is most conveniently performed by a, preferably single, digitally controlled fade out/in circuit at the input of the sound output stage, the control input of that circuit being controlled by a digital signal, which is preferably computer-generated. A simple switching arrangement selectively connects the sound outputs of the reading heads with the main input of the fade out/in circuit, and the switching arrangement is operated when the fade out/in circuit has faded out the input to the sound output stage and prior to commencement of fading in. This has the advantage that only a single digital signal and circuit is required for controlling fade in and fade out.

The rate of fade in is preferably made faster than the rate of fade out.

There is also a requirement in many situations for an announcement to be made over the music, such as for example the number of a car that is incorrectly parked outside a licensed premises. Rather than switching off the music abruptly, it is preferred to provide a microphone response circuit which is connected to said fade out/in circuit and is arranged to be responsive to initial operation of the microphone to fade out the input to the sound output stage, and when the microphone is switched off to fade in said input again.

It may be arranged that the microphone response circuit selectively fades out/in music in different areas of the premises.

In addition to the lead-out cue each record unit is preferably provided with a lead-in cue at a predetermined distance in advance of the beginning of the sound recording, or at least of the useful part thereof, and the change-over control means is arranged such that on loading of a record unit into one of the stations the drive means of that station is run until the lead-in cue is read by the reading head at that station and, providing that a record unit is being played at another station, the drive means at said one station is stopped. This brings the newly loaded record unit to a state of readiness in which state the beginning of the sound recording will be found when the drive means is operated for said predetermined distance.

The lead-in cue thus provides the timing signal for precise fading in of the new record unit when this is eventually utilised.

When the record units are cassette tapes or similar devices which need to be rewound the change-over control means is preferably also arranged to operate the drive means to rewind the cassette that was last played, following change-over of the selector switch means to play another cassette. This has the advantage that when the cassette is removed from the station it is already re-wound and is ready for playing again in the future, without the need for the operator to rewind the tape, which otherwise might not always be done.

In order to provide control over the music content of the sound recordings, to inhibit the playing of unauthorised material on the apparatus, the apparatus is preferably provided with a code identification means connected to the reading heads, and the lead-in portion of each authorised recording unit is provided with an identification code for reading by a reading head. It is arranged that the record unit is rejected if the code on the lead-in tape is not found to be a valid code when the output of the reading head is compared with memorised reference code data.

Preferably the identification codes of record units carrying different recordings are arranged to be different, and the change-over control means is arranged to memorise the code of a record unit that has been played and to prevent that record unit from being played again until a predetermined number of intervening record units has been played, the apparatus being arranged to reject the record unit on reading a recently memorised code.

The change-over controls means preferably incorporates a programmed computer which controls the sequencing of the operations hereinbefore described, but it will be appreciated that logic circuitry could be employed.

According to a second aspect of the invention a record unit adapted to be played on apparatus in accordance with the first aspect of the invention is provided with a lead-out cue at a predetermined distance in advance of the end of the sound recording and/or a lead-in cue at a predetermined distance in advance of the sound recording.

A sound reproducing machine for playing background music cassette tapes and in accordance with the invention will now be described, by way of example only, with reference to the accompanying schematic drawings in which:-

Figure 1 is a perspective view of the machine;

Figure 2 is a block circuit diagram of the machine;

Figures 3 to 7 show various portions of a flow diagram of the computer program controlling the machine of Figures 1 and 2.

The machine comprises a cabinet 1 housing in its base the output sound amplifier unit 2 which in use would be connected to suitable remote speakers. The front panel 3 is pierced by first and second cassette loading slots 4, 5 and a glass door 6 is hinged on the cabinet at 7 and carries a key-operated locking mechanism 8. The door and lock 8 enable the slots 4, 5 to be protected against unauthorised persons.

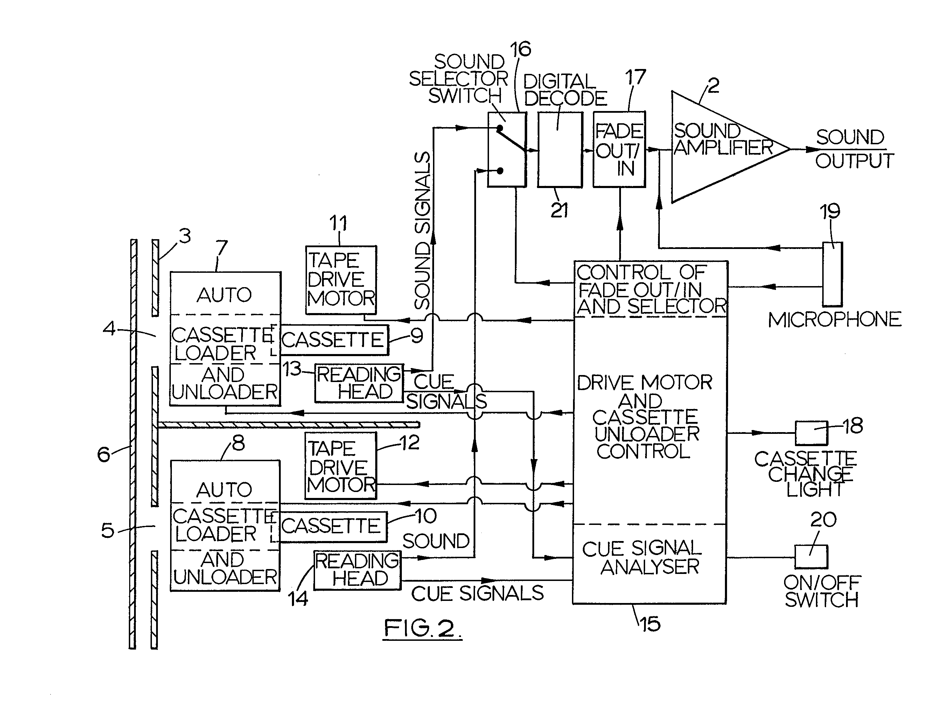

Within the cabinet and behind each loading slot 4, 5 is a respective automatic cassette loader and unloader 7, 8 of substantially conventional design, such as a SONY (Trade Mark) C20 combined tape loader/player. for loading tape cassettes into respective tape reading stations. In Figure 2 first and second cassettes 9, 10 are shown in their loaded conditions in the respective reading stations. Each reading station is of substantially conventional design and comprises a respective tape drive motor 11, 12 and a respective tape reading head 13, 14.

The cassette tapes in this case are BETAMAX (Trade Mark) video cassettes carrying a standard format digital sound recording of a sequence of pieces of music, such as pop music. At the beginning of each tape it is arranged that there is a blank lead-in portion on which is recorded a suitable cue signal positioned on the tape approximately 30 seconds before the beginning of the recorded music. The cue signal is preferably recorded on a different track of the tape from the sound recording, but it could be on the same track if desired. The cue signals must, of course, be of a form which does not give rise to a sound output from the equipment.

A master control unit 15 of the machine controls the functioning of the various machine elements and is most conveniently in the form of a programmed computer. A microprocessor, such as a 8 bit processor, e.g. the MOTOROLA (Trade Mark) 6802, is preferred.

A digital decoder 21, such as a SONY (Trade Mark) digital decoder receives the sound output of the respective reading heads 13, 14 by way of a sound selector switch 16. The output of switch 16 is connected by way of a digitally controlled fade out/fade in circuit 17 to the sound output amplifier 2.

The circuit elements 21 and 17 are provided by a digital to analogue converter which is configured to be a digitally controlled attenuator, one chip being provided for each channel. A suitable chip is designation AD 7118KN supplied by Analogue Devices.

The operating sequence of the machine will now be described, it being understood that this sequence is determined by the program of the unit 15.

The operator first unlocks lock 8 and switches the mains power on to the machine. He then inserts two cassettes into the respective loading slots 4, 5. The automatic loaders 7, 8 take the cassettes from the operator and position them in the respective reading stations. The initial part of the lead-in portions of the tapes are provided with digital security codes. The tape drive motors 11, 12 are then run sufficiently to enable the security codes to be read by the reading heads 13, 14. The codes are memorised by the unit 15.

If either code is found to be invalid then that tape is rewound by the respective drive motor 11, 12 and the cassette is ejected by the respective unit 7, 8 for return to the operator.

In the usual situation both cassettes will have valid codes, and the drive motors will continue to operate until one of the reading heads 13, 14 receives the lead-in cue signal. The drive motor associated with that cassette will continue to run so as to play the music recording on that tape, but the detection of a cue signal at one reading head is arranged to arrest the other drive motor when the lead-in cue signal is detected on the other cassette. Thus, the second tape is left in a 'ready' condition whilst the first tape is being played.

About 30 seconds before the end of the recording on each tape there is provided a lead-out cue signal, which is arranged to be different from the lead-in cue signal. The cue signals as detected by reading heads 13, 14 are analysed by unit 15, and when the lead-out cue signal from the first tape being played is picked up, by say reading head 13, then the unit 15 starts the drive motor 12 associated with the second cassette, which was waiting in the 'ready condition'.

The selector switch 16 during playing of the first tape is set by unit 15 to pass sound signals from reading head 13 to sound amplifier 2, and is not arranged to switch until the sound output from reading head 13 has been digitally faded by fade out/in circuit 17. This ensures that no switching sound is produced. The fade out is performed under the control of a digital fade out function generated by the unit 15. After fade out of sound from the first tape and switching of selector switch 16, the second tape has been run up to speed and the sound recording on the second tape has reached the reading head 14. The music from head 14 is then faded in by circuit 17 in response to a digital fade in function generated by unit 15, at a relatively fast rate compared with the relatively slow fade-out rate, and as before the common amplifier 2 provides the output to remote speakers.

Before being ejected the first tape run is rewound automatically by reversing drive motor 11, and then the first cassette is unloaded by unit 7 to bring it to a position in slot 4 where it can be removed by the operator. In order to draw the attention of the operator, a cassette change light 18 is illuminated. Conveniently this is a red flashing light. Since the cassettes are of two hours duration there is plenty of time for the operator to notice that the light 18 has come on. The light 18 serves for both cassette stations.

The operator in due course removes the first cassette from slot 4 and inserts a third cassette into slot 4. The third cassette is then loaded into the upper reading station by loader 7, and the tape drive motor 11 is run until the lead-in cue of that tape is detected, the motor 11 being deenergised at that point to leave the third cassette in the 'ready condition'.

Thus, by alternately changing the cassettes unloaded from the two reading stations a continuous supply of music can be produced without any detectable discontinuity between the recordings of the different cassettes.

If, when the first cassette was unloaded, the operator tried immediately to reload the same cassette the machine would identify this fact by comparing the code of that tape with the code that was previously memorised by unit 15, and the cassette would be ejected by unit 7.

A microphone 19 is linked into the unit 15 which is arranged to operate the fade out/in unit 17 digitally to fade out the music being played when the microphone is actuated, and then when an announcement has been completed the music is digitally faded in again.

Independent fade out/in circuits 17 and output amplifiers 2 may be provided for different areas of the premises, and the microphone is then provided with a selector switch to control in which areas that music is attenuated.

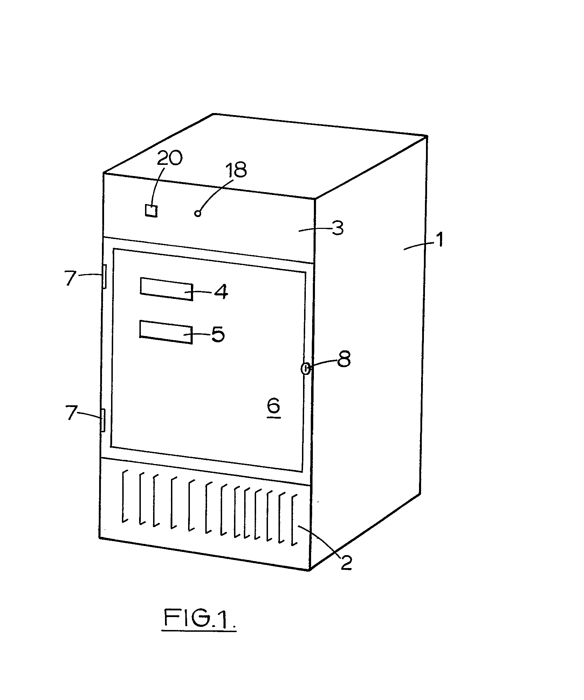

At the end of a session all the operator needs to do is to switch off the machine at an on/off switch 20, Figure 1, whereupon the fade unit 17 will be operated to fade out the music being played, that cassette will be automatically rewound and unloaded by the respective unit 7, 8, and the power supply to the entire system is then disconnected automatically.

In order to enable the operator to change a cassette whilst the cassette is being played, when it is required to change the type of music, it is arranged that an abort sequence is initiated by pushing the on/off switch 20 twice in quick succession, this resulting in operation of circuit 17 to fade out the music, and to rewind and eject that cassette, an alternative 'ready' cassette, if there is one, then being started. This mode of operation of switch 20 is detected by unit 15.

In addition to sound recording signals the tapes may be provided with light control signals, and it will be appreciated that further channels would be provided from the reading heads 13, 14 to process those signals. The units 16 and 17 could be arranged to control the light control signals in addition to controlling the sound signals.

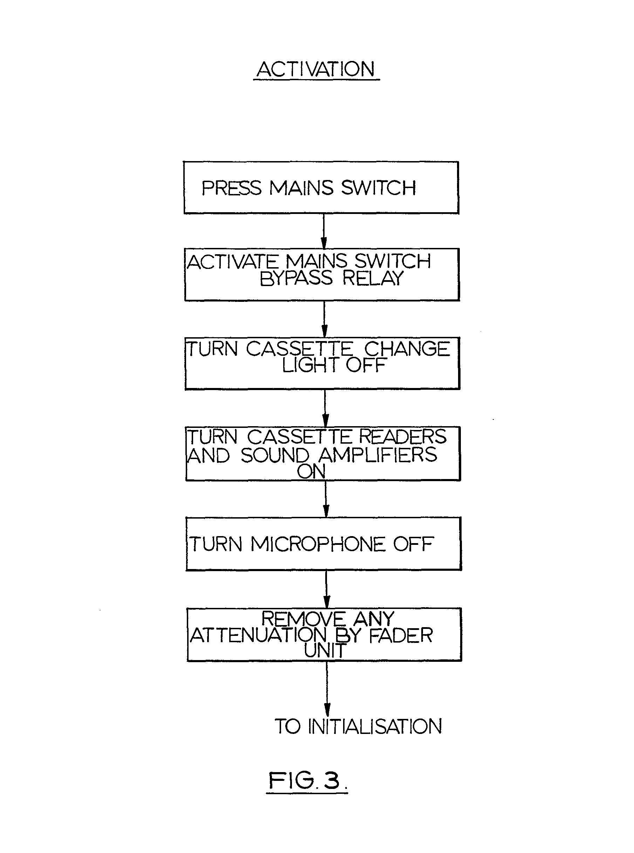

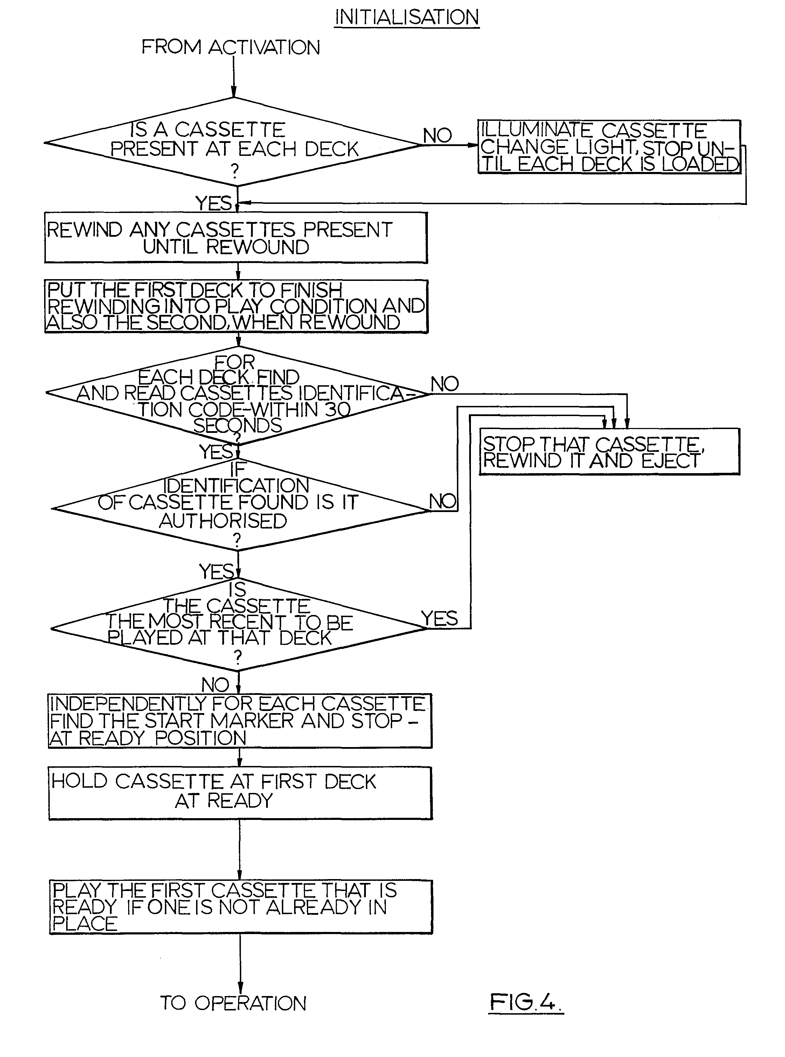

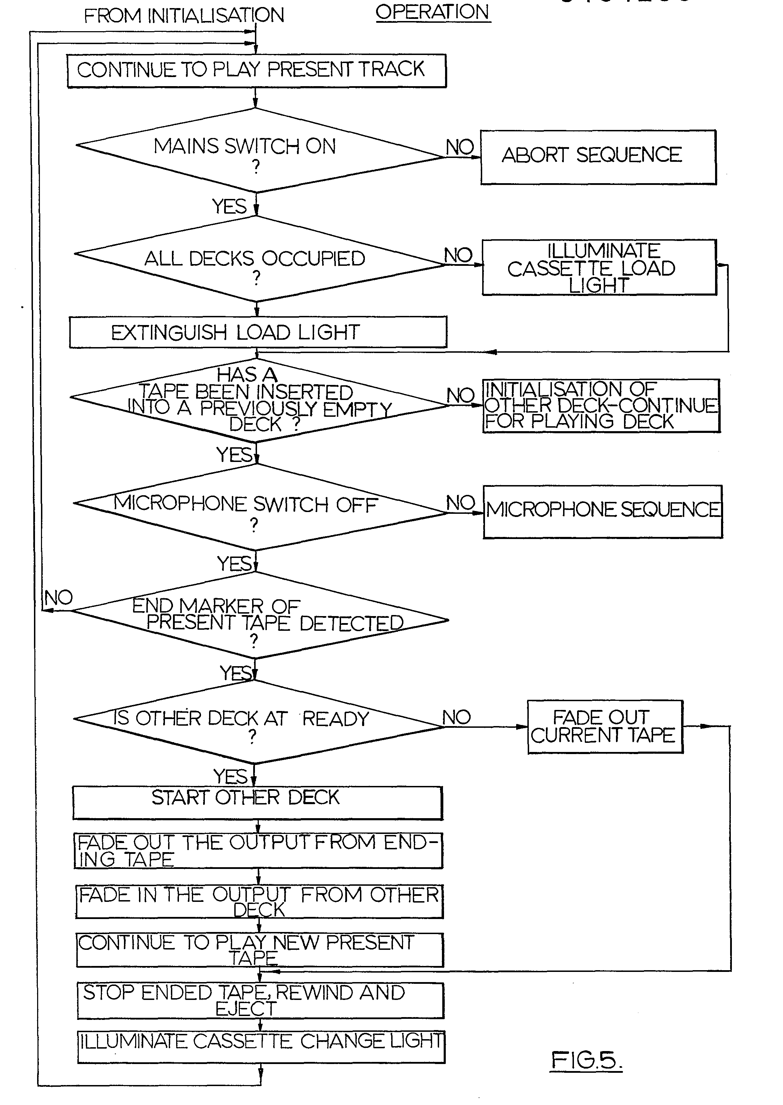

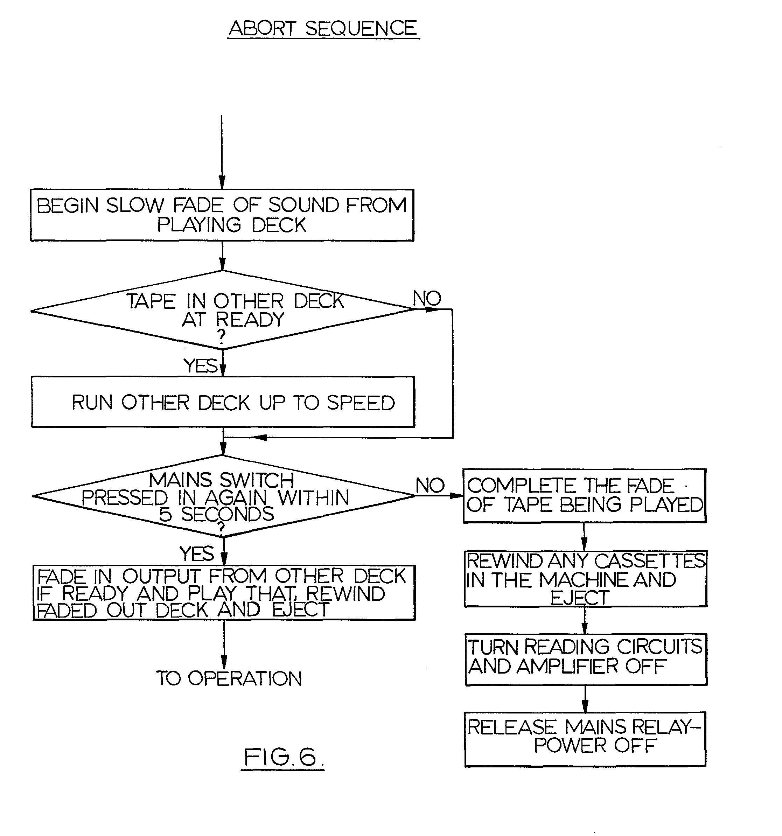

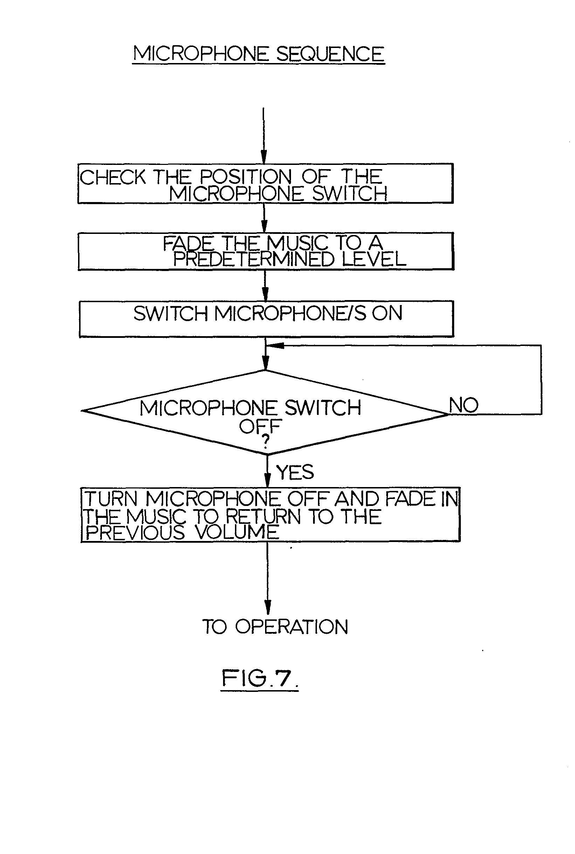

A flow diagram of the computer program of master control unit 15 is shown in Figures 3 to 7. Figures 3, 4 and 5 connect together to form a continuous program sequence, whereas Figures 6 and 7 show the abort sequence and microphone sequence respectively.

It is thought that the flow diagrams are self-explanatory in the light of the earlier description of the operation of the machine. The term 'fader unit' is used in the diagram to designate the unit 17. Reference is made in the diagram to a mains switch bypass relay which is a holding relay energised by initial pressing of the mains switch 20.

It will be appreciated that the machine described is very simple to operate, having a minimum of controls.

14

## CLAIMS

1.   A sound reproducing apparatus comprising a plurality of record unit playing stations, each station comprising a respective drive means (11, 12) for driving a record unit (9, 10) located at that station, and a respective reading head (13, 14) for reading the recording of the respective record unit, a common sound output stage (2), selector switch means (16) for selectively connecting a sound output signal of the reading heads (13, 14) to the sound output stage, and change-over control means (15) controlling the drive means and the selector switch means, characterised in that for use with record units each provided with a lead-out cue at a predetermined distance in advance of the end of the sound recording, the reading heads (13, 14) are adapted to provide a cue output signal in response to reading a cue, and the change-over control means is responsive to the cue output signals of the reading heads and is arranged such that when the lead-out cue signal is received from a first of the stations at which a record unit is being driven, the drive means (12) at a second of the stations is started, and the selector switch means (16) is subsequently operated to disconnect the sound output stage (2) from the reading head (13) of the first station and to connect the sound output stage to the reading head (14) of the second station, a similar sequence being performed when the lead-out cue signal is produced at the second station.

2.   Apparatus as claimed in claim 1 comprising indicator means (18) arranged to indicate that a record unit needs changing.

3.   Apparatus as claimed in claim 1 or claim 2 in which the selector switch means is arranged to fade out the sound ouput from the first station and to fade in the sound output from the second station in response to the lead-out cue being read.

4. Apparatus as claimed in claim 3 in which the fade out and fade in is performed by a digitally controlled fade out/in circuit (17) at the input of the sound output stage (2), the control input of that circuit being controlled by a digital signal.

5. Apparatus as claimed in claim 3 or claim 4 comprising a microphone (19) and a microphone response circuit which is connected to said fade out/in circuit and is arranged to be responsive to initial operation of the microphone to fade out the input to the sound output stage.

6. Apparatus as claimed in any of the preceding claims in which each record unit is provided with a lead-in cue at a predetermined distance in advance of the beginning of the sound recording, or at least of the useful part thereof, and the change-over control means is arranged such that on loading of a record unit into one of the stations the drive means of that station is run until the lead-in cue is read by the reading head at that station and, providing that a record unit is being played at another station, the drive means at said one station is stopped.

7. Apparatus as claimed in any of the preceding claims in which the record units are tape cassettes (9,10), and the change-over control means is arranged to operate the drive means to rewind the cassette that was last played, following change-over of the selector switch means to play another cassette.

0164253

16

8. Apparatus as claimed in any of the preceding claims comprising a code identification means connected to the reading heads, and the lead-in portion of each authorised record unit is provided with an identification code for reading by a reading head.

9. Apparatus as claimed in claim 8 for use with record units of which the identification codes of record units carrying different recordings are arranged to be different, in which the change-over control means is arranged to memorise the code of a record unit that has been played and to prevent that record unit from being played again until a predetermined number of intervening record units has been played.

10. Apparatus as claimed in any of the preceding claims comprising a respective record unit loading means (7) associated with each playing station, the loading means being arranged to convey a record unit from a manual loading location to a playing position at the respective playing station.

11. Apparatus as claimed in claim 11 in which the playing stations are housed within a cabinet (6), and the manual loading locations are provided by respective apertures (4,5) in the cabinet which are adapted to receive manually inserted record units, the respective loading means being positioned in the cabinet behind the slots to receive the record units.

12. A record unit, as hereinbefore defined, provided with a lead-out cue at a predetermined distance in advance of the end of the sound recording, suitable for use with the sound reproducing apparatus claimed in claim 1.

FIG.1.

0164253

SOUND OUTPUT

SOUND AMPLIFIER 2

19

MICROPHONE

FADE OUT/IN 17

DIGITAL DECODE 21

SOUND SELECTOR SWITCH 16

CASSETTE CHANGE LIGHT 18

ON/OFF SWITCH 20

CONTROL OF FADE OUT/IN AND SELECTOR

DRIVE MOTOR AND CASSETTE UNLOADER CONTROL

CUE SIGNAL ANALYSER 15

SOUND SIGNALS

CUE SIGNALS

TAPE DRIVE MOTOR 11

CASSETTE 9

READING HEAD 13

AUTO CASSETTE LOADER AND UNLOADER 7

TAPE DRIVE MOTOR 12

CASSETTE 10

READING HEAD 14

AUTO CASSETTE LOADER AND UNLOADER 8

CUE SIGNALS

SOUND

3

4

6

5

FIG.2.

ACTIVATION

```
┌─────────────────────────────┐
│     PRESS MAINS SWITCH      │
└─────────────────────────────┘
              │
              ▼
┌─────────────────────────────┐
│    ACTIVATE MAINS SWITCH    │
│       BYPASS RELAY          │
└─────────────────────────────┘
              │
              ▼
┌─────────────────────────────┐
│   TURN CASSETTE CHANGE      │
│        LIGHT OFF            │
└─────────────────────────────┘
              │
              ▼
┌─────────────────────────────┐
│  TURN CASSETTE READERS      │
│  AND SOUND AMPLIFIERS       │
│           ON               │
└─────────────────────────────┘
              │
              ▼
┌─────────────────────────────┐
│    TURN MICROPHONE OFF      │
└─────────────────────────────┘
              │
              ▼
┌─────────────────────────────┐
│       REMOVE ANY           │
│  ATTENUATION BY FADER       │
│          UNIT              │
└─────────────────────────────┘
              │
              ▼
        TO INITIALISATION
```

FIG. 3.

4/7

0164253

INITIALISATION

FROM ACTIVATION

IS A CASSETTE PRESENT AT EACH DECK ? — NO → ILLUMINATE CASSETTE CHANGE LIGHT, STOP UNTIL EACH DECK IS LOADED

YES

REWIND ANY CASSETTES PRESENT UNTIL REWOUND

PUT THE FIRST DECK TO FINISH REWINDING INTO PLAY CONDITION AND ALSO THE SECOND, WHEN REWOUND

FOR EACH DECK FIND AND READ CASSETTES IDENTIFICATION CODE-WITHIN 30 SECONDS ? — NO → STOP THAT CASSETTE, REWIND IT AND EJECT

YES

IF IDENTIFICATION OF CASSETTE FOUND IS IT AUTHORISED ? — NO

YES

IS THE CASSETTE THE MOST RECENT TO BE PLAYED AT THAT DECK ? — YES

NO

INDEPENDENTLY FOR EACH CASSETTE FIND THE START MARKER AND STOP - AT READY POSITION

HOLD CASSETTE AT FIRST DECK AT READY

PLAY THE FIRST CASSETTE THAT IS READY IF ONE IS NOT ALREADY IN PLACE

TO OPERATION

FIG.4.

0164253

FROM INITIALISATION          OPERATION

CONTINUE TO PLAY PRESENT TRACK

MAINS SWITCH ON ? — NO → ABORT SEQUENCE

YES

ALL DECKS OCCUPIED ? — NO → ILLUMINATE CASSETTE LOAD LIGHT

EXTINGUISH LOAD LIGHT

HAS A TAPE BEEN INSERTED INTO A PREVIOUSLY EMPTY DECK ? — NO → INITIALISATION OF OTHER DECK-CONTINUE FOR PLAYING DECK

YES

MICROPHONE SWITCH OFF ? — NO → MICROPHONE SEQUENCE

YES

END MARKER OF PRESENT TAPE DETECTED ? — NO

YES

IS OTHER DECK AT READY ? — NO → FADE OUT CURRENT TAPE

YES

START OTHER DECK

FADE OUT THE OUTPUT FROM ENDING TAPE

FADE IN THE OUTPUT FROM OTHER DECK

CONTINUE TO PLAY NEW PRESENT TAPE

STOP ENDED TAPE, REWIND AND EJECT

ILLUMINATE CASSETTE CHANGE LIGHT

FIG.5.

ABORT SEQUENCE

```
                    ┌──────────────────────────────────┐
                    │ BEGIN SLOW FADE OF SOUND FROM     │
                    │         PLAYING DECK              │
                    └──────────────────────────────────┘
                                   │
                            ◇ TAPE IN OTHER DECK ◇──── NO
                            ◇     AT READY       ◇      │
                            ◇        ?           ◇      │
                                   │ YES                │
                    ┌──────────────────────────────────┐
                    │   RUN OTHER DECK UP TO SPEED      │
                    └──────────────────────────────────┘
                                   │◄───────────────────┘
```

**TAPE IN OTHER DECK AT READY ?** — NO / YES

**RUN OTHER DECK UP TO SPEED**

**MAINS SWITCH PRESSED IN AGAIN WITHIN 5 SECONDS ?** — NO

**YES**

FADE IN OUTPUT FROM OTHER DECK IF READY AND PLAY THAT, REWIND FADED OUT DECK AND EJECT

TO OPERATION

COMPLETE THE FADE OF TAPE BEING PLAYED

REWIND ANY CASSETTES IN THE MACHINE AND EJECT

TURN READING CIRCUITS AND AMPLIFIER OFF

RELEASE MAINS RELAY— POWER OFF

FIG.6.

MICROPHONE SEQUENCE

```
                    │
                    ▼
┌───────────────────────────────────────┐
│  CHECK THE POSITION OF THE             │
│        MICROPHONE SWITCH               │
└───────────────────────────────────────┘
                    │
                    ▼
┌───────────────────────────────────────┐
│      FADE THE MUSIC TO A               │
│      PREDETERMINED LEVEL               │
└───────────────────────────────────────┘
                    │
                    ▼
┌───────────────────────────────────────┐
│      SWITCH MICROPHONE/S ON            │
└───────────────────────────────────────┘
                    │
                    ▼
            ◇ MICROPHONE SWITCH ◇   NO
            ◇       OFF         ◇ ──────▶
            ◇        ?          ◇
                    │ YES
                    ▼
┌───────────────────────────────────────┐
│ TURN MICROPHONE OFF AND FADE IN        │
│ THE MUSIC TO RETURN TO THE             │
│ PREVIOUS VOLUME                        │
└───────────────────────────────────────┘
                    │
                    ▼
              TO OPERATION
```

FIG.7.

0164253

**European Patent Office**

## EUROPEAN SEARCH REPORT

Application number

EP 85 30 3840

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 447 392 (TED BILDPLATTEN AG) * Page 8, lines 4-8; page 10, paragraph 1; page 11, paragraph 1 - page 13, paragraph 3 * | 1,10, 12 | G 11 B 15/68 G 11 B 31/00 |
| A | GB-A-2 041 622 (VIGNA) * Page 1, line 50 - page 2, line 32 * | 1,3,6, 7,12 | |
| A | US-A-4 309 729 (KICE) * Column 7, line 60 - column 8, line 16 * | 1,7 | |
| A | US-A-4 262 314 (SMITH et al.) * Column 3, lines 13-64; column 4, lines 54-57; figures 1,2 * | 1,11 | TECHNICAL FIELDS SEARCHED (Int. Cl.4) |
| A | US-A-4 233 638 (BOLICK et al.) * Column 3, lines 8-31 * | 1,2 | G 11 B 15/68 G 11 B 31/00 |
| A | US-A-4 070 698 (CURTIS et al.) * Column 1, lines 6-19; column 2, line 60 - column 3, line 19 * | 5 | |

The present search report has been drawn up for all claims

| Place of search | Date of completion of the search | Examiner |
|---|---|---|
| BERLIN | 26-08-1985 | WIBERGH S.R. |